# EUROPÄISCHE PATENTSCHRIFT

(11) **EP 2 288 434 B1**
(45) Veröffentlichungstag und Bekanntmachung des Hinweises auf die Patenterteilung: **07.03.2012**
(21) Anmeldenummer: 09768600.0
(22) Anmeldetag: 22.06.2009
(51) Int. Cl.: B01F 5/06, B29B 7/32, B23H 9/00

(54) **STATISCHE MISCHVORRICHTUNG UND VERFAHREN ZUM HERSTELLEN**
STATIC MIXING DEVICE, AND PRODUCTION METHOD
DISPOSITIF DE MÉLANGE STATIQUE ET SON PROCÉDÉ DE FABRICATION

(30) Priorität: 26.06.2008 AT 10172008
(43) Veröffentlichungstag der Anmeldung: 02.03.2011
(73) Patentinhaber: Gruber & Co Group GmbH, 4643 Pettenbach (AT)
(72) Erfinder: KRUMBÖCK, Erwin, A-4052 Ansfelden (AT)
(74) Vertreter: Hübscher, Helmut
(86) Internationale Anmeldenummer: PCT/AT2009/000247
(87) Internationale Veröffentlichungsnummer: WO 2009/155625

(56) Entgegenhaltungen:
- EP-A1- 0 619 134
- WO-A1-98/05872
- WO-A1-99/64666
- WO-A1-02/072250

## Beschreibung

### Technisches Gebiet

Die Erfindung bezieht sich auf eine statische Mischvorrichtung mit einem Strömungskanal und mit über den Querschnitt des Strömungskanals verteilten Mischelementen in Form von an einer in Strömungsrichtung verlaufenden Wand angeordneten Strömungskörpern, die je durch eine gegenüber der Wand geneigt verlaufende, von einer quer zur Strömungsrichtung verlaufenden Basis ausgehende, sich verjüngende Ablenkfläche und durch zwei von der Wand abstehende, in einer quer zur Kanalachse verlaufenden Kante auf der der Basis gegenüberliegenden Seite der Strömungskörper zusammenlaufende Leitflächen begrenzt sind.

### Stand der Technik

Beim Extrudieren von Kunststoff ergibt sich insbesondere im Zusammenhang mit Doppelschneckenextrudern ein schmelzflüssiger Kunststoffstrang mit einer über den Querschnitt ungleichförmigen Temperaturverteilung, was unter anderem zu unterschiedlichen Wanddicken von Kunststoffprofilen führt, die mit Hilfe von formgebenden Düsen aus diesem schmelzflüssigen Strang geformt werden. Aus diesem Grund werden vorzugsweise statische Mischvorrichtungen unterschiedlicher Bauart eingesetzt, die für einen Temperaturausgleich sorgen sollen. Zu diesem Zweck eingesetzte, übliche Mischvorrichtungen weisen in den Strömungsweg des Kunststoffstranges ragende Ablenkflächen auf, die trotz unterschiedlicher Ausgestaltungsmöglichkeiten jeweils eine Ablenkung der Schmelze quer zur Strömungsrichtung beabsichtigen, um den gewünschten Temperaturausgleich über den Querschnitt des schmelzflüssigen Kunststoffstranges sicherzustellen. Diese Ablenkflächen in Form von Leitflächen bedingen zusätzlich eine die Mischung unterstützende Verwirbelung, die allerdings für thermisch empfindliche Kunststoffe, z. B. auf der Basis von Polyvinylchlorid, die Gefahr einer örtlichen Beschädigung des Kunststoffes aufgrund längerer Verweilzeiten mit sich bringt.

Um zwei Flüssigkeiten miteinander zu vermischen ist es darüber hinaus bekannt (EP 0 619 134 B1), Mischelemente in Form von Strömungskörpern einzusetzen, die auf beiden Seiten einer im Strömungskanal vorgesehenen Trennwand zwischen den zu mischenden Flüssigkeiten angeordnet sind und je aus einer Ablenkfläche und zwei seitlichen Leitflächen bestehen, die von einer von der Trennwand abstehenden Kante in Richtung der Kanalachse divergierend bis zu einer quer zur Strömungsrichtung ausgerichteten Basis für die Ablenkfläche auseinanderlaufen, wobei die Ablenkfläche von dieser Basis gegen die Kante zwischen den beiden Leitflächen ansteigt. Die Strömungskörper werden somit durch dreieckförmige Leitflächen sowie eine dreieckförmige Ablenkfläche begrenzt zwischen der und den Leitflächen sich je eine Strömungskante ergibt, die unabhängig davon, ob diese Strömungskörper von der Seite der Kante zwischen den beiden seitlichen Leitflächen oder von der Seite der Basis der Ablenkfläche her angeströmt werden, für eine gegensinnige Wirbelbildung der Flüssigkeit sorgen, sodass sich im Abströmbereich der Strömungskörper in Fortsetzung der mit den Strömungskörpern endenden Trennwand eine innige Verwirbelung der beiden Flüssigkeiten einstellt. Um diese Wirkung vorteilhaft nützen zu können, wird bevorzugt ein ringförmiger Strömungskanal mit einem Trennwandring eingesetzt, über dessen Umfang die Strömungskörper verteilt angeordnet werden, und zwar so, dass die Strömungskörper auf der einen Seite des Trennwandringes gegenüber den Strömungskörpern auf der gegenüberliegenden Trennwandseite auf Lücke versetzt angeordnet werden, was nicht nur eine Wirbelüberlagerung im Anschluss an die ringförmige Trennwand ermöglicht, sondern auch höhere Druckverluste vermeidet. Wegen der angestrebten Verwirbelung der zu mischenden Flüssigkeiten sind solche statische Mischvorrichtungen allerdings für die Mischung von thermisch empfindlichen Kunststoffschmelzen, wie solche auf Polyvinylchloridbasis, ungeeignet.

### Darstellung der Erfindung

Der Erfindung liegt somit die Aufgabe zugrunde, eine Mischvorrichtung zu schaffen, die für einen guten Temperaturausgleich über den Strömungsquerschnitt extrudierter Kunststoffstränge, insbesondere auf Polyvinylchloridbasis sorgt, ohne eine örtliche thermische Überbeanspruchung des Kunststoffstranges befürchten zu müssen.

Ausgehend von einer statischen Mischungsvorrichtung der eingangs geschilderten Art, löst die Erfindung die gestellte Aufgabe dadurch, dass die an der Kanalwand angeordneten Strömungskörper in einer Projektion in Richtung der Kanalachse den Strömungsquerschnitt mit Ausnahme von Durchtrittsschlitzen zwischen den sich jeweils zwischen den Leitflächen und der Ablenkfläche ergebenden Strömungskanten ausfüllen und dass zumindest die Strömungskanten zwischen den Leitflächen und der Ablenkfläche der Strömungskörper gerundet sind.

Durch die vorzugsweise in Strömungsrichtung ansteigenden Ablenkflächen wird der schmelzflüssige Kunststoffstrang gegen die Kanalachse hin abgelenkt, was für die im Bereich der Durchtrittsschlitze zwischen den Strömungskörpern verlaufenden Teilströme eine Verdrängung radial nach außen zur Folge hat, sodass sich eine entsprechende Mischung über den Strömungsquerschnitt und damit ein weitgehender Temperaturausgleich ergibt. Aufgrund der Rundung zumindest der Strömungskanten zwischen den Leitflächen und der Ablenkfläche der Strömungskörper kann eine laminare Strömung des schmelzflüssigen Kunststoffstranges aufrecht erhalten werden, zumal die an die Ablenkfläche entlang der Durchtrittsschlitze anschließenden, sich im Bereich der einzelnen Strömungskörper in einer im Wesentlichen radial verlaufenden Kante schneidenden Leitflächen Strömungstoträume vermeiden und zusammen mit den gegenüberliegenden Leitflächen der jeweils benachbarten Strömungskörper einen sich in Strömungsrichtung kontinuierlich erweiternden Strömungsweg begrenzen, in dem durch die entlang der Ablenkfläche nach innen geleiteten Teilströmungen andere Teilströmungen eine radiale Verdrängung nach außen erfahren. Da die Strömungskörper den Strömungsquerschnitt des Strömungskanals in einer Projektion in Richtung der Kanalachse mit Ausnahme von Durchtrittschlitzen ausfüllen, wird im Wesentlichen der gesamte Strömungsquerschnitt des schmelzflüssigen Kunststoffstranges von den Mischelementen erfasst, was eine nicht unerhebliche Voraussetzung für eine radiale Verlagerung von Teilströmungen zum Zweck eines weitgehenden Temperaturausgleichs über den Querschnitt des Kunststoffstranges darstellt. Obwohl die Anströmung der Mischelemente von der Basis der Ablenkfläche der Strömungskörper her bevorzugt wird, ist auch eine gegensinnige Anströmung möglich, weil sich aufgrund der laminaren Strömungsbedingungen vergleichbare Mischeffekte bei einer gegensinnigen Durchströmung der Mischvorrichtung ergeben.

Die Mischvorrichtung ist zwar vom Strömungsquerschnitt des Strömungskanals weitgehend unabhängig, doch ergeben sich besonders vorteilhafte Mischbedingungen, wenn der Strömungskanal kreiszylindrisch ausgebildet wird, wobei die Ablenkflächen der Strömungskörper auf einer Kegelfläche mit einer mit der Kanalachse zusammenfallenden Kegelachse liegen, sodass sich ein die Strömung des schmelzflüssigen Kunststoffstranges wenig behindernder Übergang von einem kreisförmigen Strömungsquerschnitt auf den Strömungskanal der Mischvorrichtung ergibt, was sich vorteilhaft auf den Druckbedarf für die Mischvorrichtung auswirkt. Besonders einfache Konstruktionsverhältnisse ergeben sich in diesem Zusammenhang, wenn die Strömungskörper rotationssymmetrisch um die Kanalachse angeordnet sind, was symmetrische Mischbedingungen nach sich zieht. Ist mit unsymmetrischen Temperaturverteilungen über den Querschnitt des Kunststoffstranges zu rechnen, so kann eine dieser unsymmetrischen Temperaturverteilung Rechnung tragende unsymmetrische Verteilung der Strömungskörper bzw. eine unterschiedliche Ausbildung der Durchtrittsschlitze zwischen den einzelnen Strömungskörpern vorgesehen werden.

Besonders einfache Herstellungsbedingungen ergeben sich für statische Mischvorrichtungen mit einem Strömungskanal und mit über den Querschnitt des Strömungskanals verteilten Mischelementen in Form von an einer in Strömungsrichtung verlaufenden Wand angeordneten Strömungskörpern, die je durch eine gegenüber der Wand geneigt verlaufende, von einer quer zur Strömungsrichtung verlaufenden Basis ausgehende, sich verjüngende Ablenkfläche und durch zwei von der Wand abstehende in einer quer zur Kanalachse verlaufenden Kante auf der der Basis gegenüberliegenden Seite der Strömungskörper zusammenlaufende Leitflächen begrenzt werden, dadurch, dass ein die Außenform des Strömungskanals aufweisender, voller Grundkörper in einer an sich beliebigen Reihenfolge schrittweise bearbeitet wird, wobei diese Schritte das Vorsehen einander in der Achse des Grundkörpers schneidender, sich bis zur Innenfläche des Strömungskanals erstreckender und die Strömungskörper in Umfangsrichtung voneinander trennender Axialschlitze sowie das Erzeugen einerseits der Ablenkflächen mit Hilfe eines Erodierdrahtes, der mit einem Ende in der Achse des Grundkörpers festgehalten und entlang der stirnseitigen Begrenzung der Innenfläche des Strömungskanals geführt wird, und anderseits der Leitflächen jeweils ebenfalls mit Hilfe eines Erodierdrahtes umfasst, der mit seinem einen Ende im jeweiligen Axialschlitz an der Innenfläche des Strömungskanals im Bereich der Ablenkflächen festgehalten und entlang der quer zur Kanalachse verlaufenden Kante der jeweiligen Leitflächen geführt wird. Wird der mit einem Ende in der Achse des Grundkörpers festgehaltene Erodierdraht für die Formung der Ablenkflächen entlang der stirnseitigen Begrenzung der Innenfläche des Strömungskanals geführt, so werden aus dem durch die Axialschlitze sternförmig unterteilten Grundkörper sektorförmige Kegelabschnitte abgetrennt, wobei die verbleibenden hohlen Kegelflächen die Ablenkflächen der Strömungskörper bilden. Die diese Strömungskörper auf der den Ablenkflächen in Strömungsrichtung gegenüberliegenden Seite begrenzenden Leitflächen können in ähnlich einfacher Weise mit Hilfe von Erodierdrähten bearbeitet werden, indem diese an der Innenwand des Strömungskanals im jeweiligen Axialschlitz im Bereich der Ablenkflächen festgehaltenen Erodierdrähte entlang der Kante zwischen den Ablenkflächen und dann entlang des stirnseitigen Innenumfangs des Strömungskanals geführt werden. Die Kanten zwischen den Leitflächen der einzelnen Strömungskörper liegen dabei vorzugsweise in einer zur Achse des Grundkörpers normalen Ebene, was jedoch nicht zwingend ist.

### Kurze Beschreibung der Zeichnung

In der Zeichnung ist der Erfindungsgegenstand beispielsweise dargestellt. Es zeigen
- Fig. 1: eine erfindungsgemäße statische Mischvorrichtung in einer Draufsicht in Strömungsrichtung,
- Fig. 2: diese Mischvorrichtung in einer Ansicht entgegen der Strömungsrichtung,
- Fig. 3: einen Schnitt nach der Linie 111-111 der Fig. 1,
- Fig. 4: einen Schnitt nach der Linie IV-IV der Fig. 1,
- Fig. 5: einen Strömungskörper in einer schaubildlichen Darstellung und
- Fig. 6: einen Schnitt durch einen Strömungskörper nach der Linie VI-VI der Fig. 1.

### Weg zur Ausführung der Erfindung

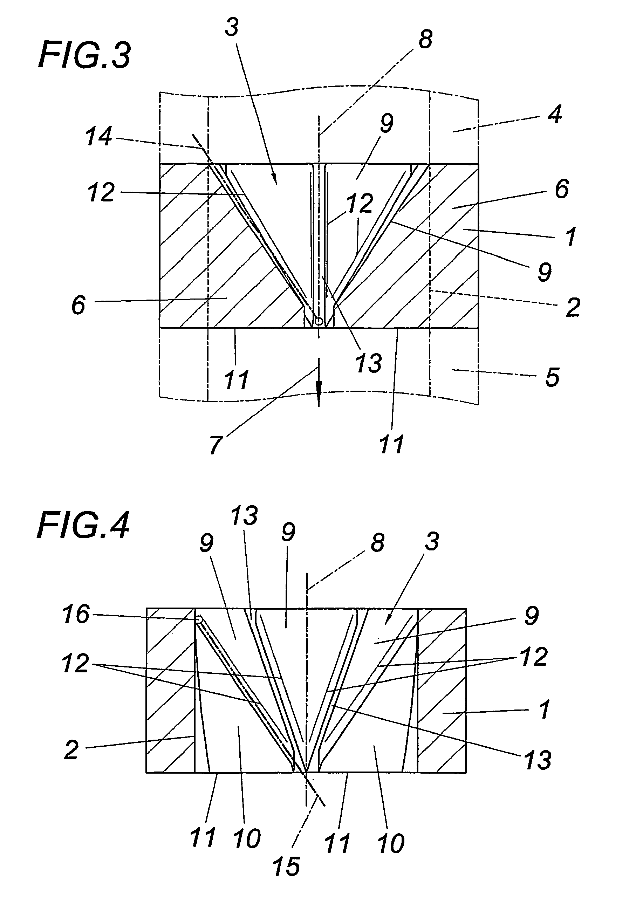

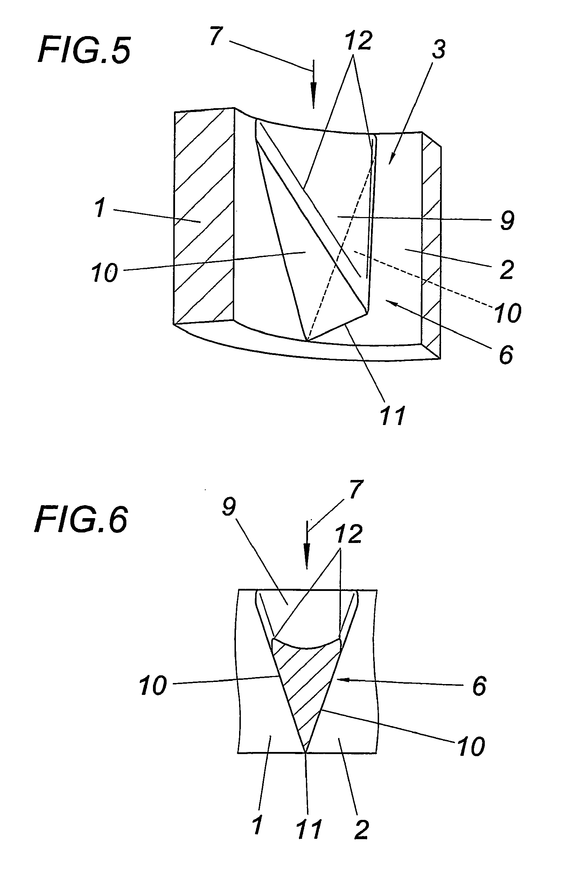

Die dargestellte statische Mischvorrichtung weist einen kreiszylindrischen Mantel 1 auf, dessen Innenfläche 2 einen Strömungskanal 3 für einen schmelzflüssigen Kunststoffstrang, insbesondere auf Polyvinylchloridbasis, bildet, der über kreiszylindrische Leitungen 4, 5 zu- und abgeführt wird, wie dies in der Fig. 3 strichpunktiert angedeutet ist. Von der Innenfläche 2 des Mantels 1 ragen Mischelemente in den Strömungskanal 3. Diese Mischelemente weisen die Form von Strömungskörpern 6 auf, von denen einer in den Fig. 5 und 6 näher dargestellt ist. Aus dieser Darstellung kann entnommen werden, dass die Strömungskörper 6 eine gemäß der im Ausführungsbeispiel gewählten Strömungsrichtung 7, die aber nicht zwingend ist, von einer quer zur Strömungsrichtung 7 verlaufenden Basis gegen die Achse 8 des Strömungskanals 3 geneigte Ablenkfläche 9 und zwei seitliche Leitflächen 10 aufweisen, die zu einer von der Innenfläche 2 radial abstehenden Kante 11 zusammenlaufen. Die sich zwischen den Leitflächen 10 und der Ablenkfläche 9 ergebenden Strömungskanten 12 sind gerundet, wie dies insbesondere der Fig. 6 entnommen werden kann.

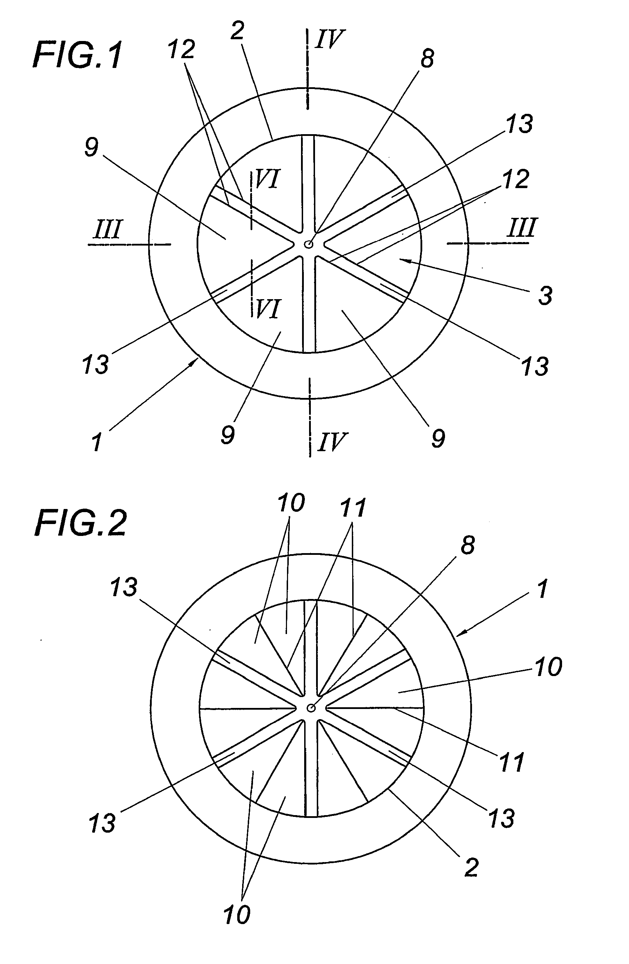

Aus den Fig. 1 und 2 wird ersichtlich, dass in einer Projektion in Richtung der Kanalachse 8 die Strömungskörper 6 den Strömungsquerschnitt im Wesentlichen ausfüllen und lediglich zwischen sich Durchtrittsschlitze 13 freilassen. Aufgrund der bezüglich der Achse 8 des Strömungskanals 3 rotationssymmetrischen Anordnung der Strömungskörper 6 ergibt sich der engste Durchtritt zwischen den Strömungskörpern 6 zwischen den gerundeten Strömungskanten 12 benachbarter Mischelemente. Von diesem engsten Durchtrittsquerschnitt erweitern sich die Strömungswege kontinuierlich zwischen den in Strömungsrichtung 7 divergierenden Leitflächen 10 bis austrittseitig der volle Kreisquerschnitt des Strömungskanals 3 wieder erreicht ist.

Aufgrund der geschilderten Ausbildung der Strömungskörper 6 wird ein über die Leitung 4 zugeförderter, im Querschnitt kreisförmiger, schmelzflüssiger Kunststoffstrang in den auf die Ablenkflächen 9 auftreffenden Bereiche entlang dieser Ablenkflächen 9 gegen die Achse 8 des Strömungskanals 3 abgelenkt, um bezüglich des Auftreffbereichs radial einwärts versetzt durch die Durchtrittsschlitze 13 zwischen den Strömungskörpern 6 durchzuströmen. Die gegen die Kanalachse 8 hin verdrängten Strangbereiche bedingen, dass andere Strangbereiche innerhalb der sich im Anschluss an die engsten Stellen der Durchtrittsschlitze 13 ergebenden, divergierenden Strömungsabschnitte radial nach außen verdrängt werden, was eine Mischung des Kunststoffstranges über seinen Querschnitt und damit einen weitgehenden Temperaturausgleich zur Folge hat. Wegen der durch die gerundeten Strömungskanten 12 und der sich im Anschluss an diese Strömungskanten kontinuierlich erweiternden Strömungsabschnitte kann innerhalb der Mischvorrichtung eine laminare Strömung sichergestellt werden, die eine wesentliche Voraussetzung darstellt, um auch thermisch empfindliche Kunststoffstränge, wie solche auf Polyvinylchloridbasis, ohne bereichsweise thermische Überlastung mischen zu können. Außerdem kann der Förderdruck auf für diese Kunststoffe zulässige Bereiche beschränkt bleiben.

Die Herstellung der dargestellten Mischvorrichtung ist vergleichsweise einfach, weil die die Strömungskörper 6 begrenzenden Flächen 9, 10 aus Geraden erzeugt werden können, sodass sich die Mischvorrichtung aus einem den Außenumfang des Strömungskanals bildenden, vollen Grundkörper durch ein Elektroerodieren mit Hilfe von Erodierdrähten gefertigt werden kann. Zu diesem Zweck kann der zylindrische Grundkörper zunächst mit Axialschlitzen versehen werden, die dem engsten Durchtritt der Durchtrittsschlitze 13 entsprechen und sich daher in der Achse 8 des Strömungskanals 3 schneiden. Mit Hilfe eines Erodierdrahtes 14, der gemäß der Fig. 3 im Bereich der einen Stirnseite des Grundkörpers in der Achse 8 des Strömungskanals 3 festgehalten wird und sich durch einen Axialschlitz bis zum stirnseitigen Innenumfang 2 auf der gegenüberliegenden Stirnseite erstreckt, kann somit aus dem geschlitzten Grundkörper ein Kegel abgetrennt werden, wenn der Erodierdraht 14 entlang des stirnseitigen Kreises der Innenfläche 2 geführt wird. Zwischen den axialen Schlitzen ergeben sich somit die auf einer gemeinsamen Kegelfläche liegenden Ablenkflächen 9. Zur Ausbildung der an die Ablenkflächen 9 in Strömungsrichtung 7 anschließenden Leitflächen 10 muss der jeweilige Erodierdraht 15 gemäß der Fig. 4 im Bereich der Axialschlitze jeweils auf der den Kanten 11 gegenüberliegenden Seite im Bereich der Ablenkflächen 9 an der Innenfläche 2 festgehalten werden, um bei einem Verlauf von diesem Festpunkt 16 entlang der Strömungskante 12 zur Achse 8 zunächst entlang der Kante 11 zwischen den Leitflächen 10 eines Strömungskörpers 6 und dann entlang der Innenfläche 2 des Strömungskanals 3 geführt zu werden. Obwohl sich durch das Einarbeiten der Axialschlitze in den vollen Grundkörper, was ebenfalls durch ein Elektroerodieren durchgeführt werden kann spätere Bohrungen zur Einführung der Erodierdrähte 14 bzw. 15 erübrigen, ist die geschilderte Reihenfolge der Bearbeitungsschritte keineswegs erforderlich. Die einzelnen Flächen der Strömungskörper 6 können in einer beliebigen Reihenfolge bearbeitet werden.

## Patentansprüche

1. Statische Mischvorrichtung mit einem Strömungskanal (3) und mit über den Querschnitt des Strömungskanals (3) verteilten Mischelementen in Form von an einer in Strömungsrichtung (7) verlaufenden Wand angeordneten Strömungskörpern (6), die je durch eine gegenüber der Wand geneigt verlaufende, von einer quer zur Strömungsrichtung (7) verlaufenden Basis ausgehende, sich verjüngende Ablenkfläche (9) und durch zwei von der Wand abstehende, in einer quer zur Kanalachse (8) verlaufenden Kante (11) auf der der Basis gegenüberliegenden Seite der Strömungskörper (6) zusammenlaufende Leitflächen (10) begrenzt sind, **dadurch gekennzeichnet, dass** die an der Kanalwand angeordneten Strömungskörper (6) in einer Projektion in Richtung der Kanalachse (8) den Strömungsquerschnitt mit Ausnahme von Durchtrittsschlitzen (13) zwischen den sich jeweils zwischen den Leitflächen (10) und der Ablenkfläche (9) ergebenden Strömungskanten (12) ausfüllen und dass zumindest die Strömungskanten (12) zwischen den Leitflächen (10) und der Ablenkfläche (9) der Strömungskörper (6) gerundet sind.

2. Statische Mischvorrichtung nach Anspruch 1, **dadurch gekennzeichnet, dass** der Strömungskanal (3) kreiszylindrisch ausgebildet ist und dass die Ablenkflächen (9) der Strömungskörper (6) auf einer Kegelfläche mit einer mit der Kanalachse (8) zusammenfallenden Kegelachse liegen.

3. Statische Mischvorrichtung nach Anspruch 1 oder 2, **dadurch gekennzeichnet, dass** die Strömungskörper (6) rotationssymmetrisch um die Kanalachse (8) angeordnet sind.

4. Verfahren zum Herstellen einer statischen Mischvorrichtung nach Anspruch 1 mit einem Strömungskanal (3) und mit über den Querschnitt des Strömungskanals (3) verteilten Mischelementen in Form von an einer in Strömungsrichtung (7) verlaufenden Wand angeordneten Strömungskörpern (6), die je durch eine gegenüber der Wand geneigt verlaufende, von einer quer zur Strömungsrichtung (7) verlaufenden Basis ausgehende, sich verjüngende Ablenkfläche (9) und durch zwei von der Wand abstehende, in einer quer zur Kanalachse (8) verlaufenden Kante (11) auf der der Basis gegenüberliegenden Seite der Strömungskörper (6) zusammenlaufende Leitflächen (10) begrenzt werden, **dadurch gekennzeichnet, dass** ein die Außenform des Strömungskanals (3) aufweisender, voller Grundkörper in einer an sich beliebigen Reihenfolge schrittweise bearbeitet wird, wobei diese Schritte das Vorsehen einander in der Achse (8) des Grundkörpers schneidender, sich bis zur Innenfläche (2) des Strömungskanals (3) erstreckender und die Strömungskörper (6) in Umfangsrichtung voneinander trennender Axialschlitze sowie das Erzeugen einerseits der Ablenkflächen (9) mit Hilfe eines Erodierdrahtes (14), der mit einem Ende in der Achse (8) des Grundkörpers festgehalten und entlang der stirnseitigen Begrenzung der Innenfläche (2) des Strömungskanals (3) geführt wird, und anderseits der Leitflächen (10) jeweils ebenfalls mit Hilfe eines Erodierdrahtes (15) umfasst, der mit seinem einen Ende im jeweiligen Axialschlitz an der Innenfläche (2) des Strömungskanals (3) im Bereich der Ablenkflächen (9) festgehalten und entlang der quer zur Kanalachse (8) verlaufenden Kante (11) der jeweiligen Leitflächen (10) geführt wird.

## Claims

1. Static mixing device having a flow channel (3) and having mixing elements distributed over the cross-section of the flow channel (3) in the form of flow bodies (6) disposed on a wall extending in the flow direction (7), wherein the flow bodies are delimited in each case by a tapering deflector surface (9) - which extends in an inclined manner with respect to the wall and starts from a base extending transversely to the flow direction (7) - and by two guiding surfaces (10) which protrude from the wall and converge in an edge (11), extending transversely to the channel axis (8), on the side of the flow bodies (6) opposite the base, **characterised in that** the flow bodies (6), disposed on the channel wall, in a projection in the direction of the channel axis (8) fill the flow cross-section except for through-going slots (13) between the flow edges (12) produced in each case between the guiding surfaces (10) and the deflector surface (9), and **in that** at least the flow edges (12) between the guiding surfaces (10) and the deflector surface (9) of the flow bodies (6) are rounded.

2. Static mixing device as claimed in Claim 1, **characterised in that** the flow channel (3) is formed to be circular-cylindrical, and **in that** the deflector surfaces (9) of the flow bodies (6) lie on a conical surface having a cone axis coinciding with the channel axis (8).

3. Static mixing device as claimed in Claim 1 or 2, **characterised in that** the flow bodies (6) are disposed so as to be rotationally symmetrical about the channel axis (8).

4. Method for producing a static mixing device as claimed in Claim 1, having a flow channel (3) and having mixing elements distributed over the cross-section of the flow channel (3) in the form of flow bodies (6) disposed on a wall extending in the flow direction (7), wherein the flow bodies are delimited in each case by a tapering deflector surface (9) - which extends in an inclined manner with respect to the wall and starts from a base extending transversely to the flow direction (7) - and by two guiding surfaces (10) which protrude from the wall and converge in an edge (11), extending transversely to the channel axis (8), on the side of the flow bodies (6) opposite the base, **characterised in that** a complete base body having the external shape of the flow channel (3) is processed in a step-wise manner in any particular sequence, wherein these steps induce the provision of axial slots which intersect each other in the axis (8) of the base body, extend to the inner surface (2) of the flow channel (3) and separate the flow bodies (6) from each other in the peripheral direction, and the production on the one hand of the deflector surfaces (9) using an erosion wire (14) which is fixedly held at one end in the axis (8) of the base body and is guided along the end-side delimitation of the inner surface (2) of the flow channel (3), and on the other hand of the guiding surfaces (10) in each case likewise using an erosion wire (15) which is fixedly held at one end thereof in the respective axial slot on the inner surface (2) of the flow channel (3) in the region of the deflector surfaces (9) and is guided along the edge (11) of the respective guiding surfaces (10) which extends transversely to the channel axis (8).

## Revendications

1. Dispositif de mélange statique avec un canal d'écoulement (3) et des éléments de mélange répartis sur la section transversale du canal d'écoulement (3), sous la forme de corps d'écoulement (6) disposés sur une paroi s'étendant dans le sens d'écoulement (7) qui sont respectivement délimités par une surface de déviation (9) inclinée par rapport à la paroi, s'étendant à partir d'une base s'étendant perpendiculairement au sens d'écoulement (7) et s'amincissant, et par deux surfaces de guidage (10) en saillie par rapport à la paroi, se rejoignant dans une arête (11) perpendiculaire à l'axe de canal (8), sur le côté des corps d'écoulement (6) opposé à la base, **caractérisé en ce que** les corps d'écoulement (6) disposés sur la paroi de canal remplissent la section transversale d'écoulement dans une projection en direction de l'axe de canal (8), à l'exception des fentes de passage (13) entre les arêtes d'écoulement (12) respectivement créées entre les surfaces de guidage (10) et la surface de déviation (9), et **en ce qu'**au moins les arêtes d'écoulement (12) situées entre les surfaces de guidage (10) et la surface de déviation (9) des éléments d'écoulement (6) sont arrondies.

2. Dispositif de mélange statique selon la revendication 1, **caractérisé en ce que** le canal d'écoulement (3) est conçu de manière cylindrique circulaire et **en ce que** les surfaces de déviation (9) des éléments d'écoulement (6) sont placées sur une surface tronconique avec un axe de cône coïncidant avec l'axe de canal (8).

3. Dispositif de mélange statique selon la revendication 1 ou 2, **caractérisé en ce que** les éléments d'écoulement (6) sont disposés symétriques en rotation autour de l'axe de canal (8).

4. Procédé pour la fabrication d'un dispositif de mélange statique selon la revendication 1, avec un canal d'écoulement (3) et des éléments de mélange répartis sur la section transversale du canal d'écoulement (3), sous la forme de corps d'écoulement (6) disposés sur une paroi s'étendant dans le sens d'écoulement (7) qui sont respectivement délimités par une surface de déviation (9) inclinée par rapport à la paroi, s'étendant à partir d'une base s'étendant perpendiculairement au sens d'écoulement (7) et s'amincissant, et par deux surfaces de guidage (10) en saillie par rapport à la paroi, se rejoignant dans une arête (11) perpendiculaire à l'axe de canal (8), sur le côté des corps d'écoulement (6) opposé à la base, **caractérisé en ce qu'**un corps de base plein, présentant la forme extérieure du canal d'écoulement (3), est travaillé par étape dans un ordre quelconque, ces étapes comprenant de prévoir mutuellement dans l'axe (8) du corps de base des fentes axiales coupant, s'étendant jusqu'à la surface intérieure (2) du canal d'écoulement (3) et séparant les corps d'écoulement (6) les uns des autres dans le sens périphérique, ainsi que de créer d'un côté des surfaces de déviation (9) à l'aide d'un fil d'usinage (14) qui est maintenu avec une extrémité dans l'axe (8) du corps de base et mené le long de la délimitation frontale de la surface intérieure (2) du canal d'écoulement (3), et de l'autre côté des surfaces de guidage (10), à chaque fois, également, à l'aide d'un fil d'usinage (15) qui est maintenu à l'une de ses extrémités dans chaque fente axiale au niveau de la surface intérieure (2) du canal d'écoulement (3) dans la zone des surfaces de déviation (9) et mené le long de l'arête (11) perpendiculaire à l'axe du canal (8) des surfaces de guidage respectives (10).
